# EUROPEAN PATENT SPECIFICATION

(11) **EP 0 579 844 B1**
(45) Date of publication and mention of the grant of the patent: **06.05.1999**
(21) Application number: 93904378.2
(22) Date of filing: 06.02.1993
(51) Int. Cl.: H04N 7/32, H04N 5/14

(54) **METHOD AND APPARATUS FOR MOTION ESTIMATION**
VERFAHREN UND VORRICHTUNG ZUR BEWEGUNGSSCHÄTZUNG
PROCEDE ET APPAREIL D'EVALUATION DE MOUVEMENT

(30) Priority: 08.02.1992 KR 184592
(43) Date of publication of application: 26.01.1994
(73) Proprietor: Samsung Electronics Co., Ltd., Suwon-city, Kyungki-do 441-370 (KR)
(72) Inventor: JEONG, Je Chang, Seoul 137-130 (KR); AHN, Woo Youn, Suwon-City, Kyungki-do 441-373 (KR)
(74) Representative: Read, Matthew Charles
(86) International application number: PCT/KR93/00009
(87) International publication number: WO 93/16556

(56) References cited:
- EP-A- 0 468 279
- EP-A- 0 508 706
- GB-A- 2 257 326
- JP-A- 2 062 180
- JP-A-61 113 376
- SMPTE JOURNAL, vol.101, no.2, 1 February 1992, WHITE PLAINS, NY, USA pages 66 - 75, XP252752 K. UOMORI ET AL. 'Electronic Image Stabilization System for Video Cameras and VCRs'
- 'DIGITAL SPECTRUM COMPATIBLE. Technical Details' 23 September 1991 , ZENITH AND AT&T , USA * page 13, paragraph 3.4.1 - page 16; figure 3.2 *
- HIROSHI YASUDA, "International Standards of Multimedia Coding", June 30, 1991 (30.06.91), Maruzen Co., Ltd., lines 22 to 27, page 110.

## Description

The present invention relates to a motion estimating method for an image signal, comprising the steps of: comparing a block of pixels of a frame of an image signal with same-sized blocks of pixels within a region of the preceding frame to produce an error value for each possible comparison; generating a one-pixel resolution motion vector on the basis of said error values; generating a half-pixel resolution motion vector on the basis of the error value of the block at the position identified by the one-pixel resolution motion vector and the error values for the blocks at the positions displaced therefrom by one-pixel along two orthogonal axes; and summing the one-pixel and half-pixel resolution motion vectors to produce an output motion vector.

The present invention also relates to an image signal motion estimator comprising: search means for comparing a block of pixels of a frame of an image signal with same-sized blocks of pixels within a region of the preceding frame to produce an error value for each possible comparison, and generating a one-pixel resolution motion vector on the basis of said error values; means for generating a half-pixel resolution motion vector on the basis of the error value of the block at the position identified by the one-pixel resolution motion vector and the error values for the blocks at the positions displaced therefrom by one-pixel along two orthogonal axes; and means for summing the one-pixel and half-pixel resolution motion vectors.

Generally, there are several coding methods for further efficiently compressing transmission data in an image signal processing apparatus using subsequent digital image signals, such as HDTV (high definition television, Digital VTR (digital video tape recorder), and multi-media, etc. The DPCM method codes the digital signal using data correlation which is present between adjacent frames of the image signal.

In the case of coding a signal representing the difference between adjacent frames with the lapse of time using the DPCM method, a disadvantage arises because much more data is required to be coded for an active image than for a still image. However, by determining the movement of a certain block of the previous frame to a new position in the present frame, that is finding the best match between blocks in present and previous frames, efficient data compression can be performed because the signal difference values are similar blocks in successive frames are small. Accordingly, in DPCM motion estimation, the data representing the difference between the image blocks in the successive frames is coded, thereby enhancing the transmission efficiency. In the motion estimation method, a motion vector represents the direction and magnitude of the displacement between the image blocks in the successive frames.

There are several methods by which a pixel unit can perform motion estimation. Generally, the displacement between successive frames will not be an integer number of pixels. As a result, errors are introduced into the motion compensation. Therefore, a sub-pixel unit is used to increase the resolution of the motion compensation and reduce the errors. The resolution may be increased to one half pixel for example. A conventional method of motion estimation with half a pixel resolution will now be briefly described.

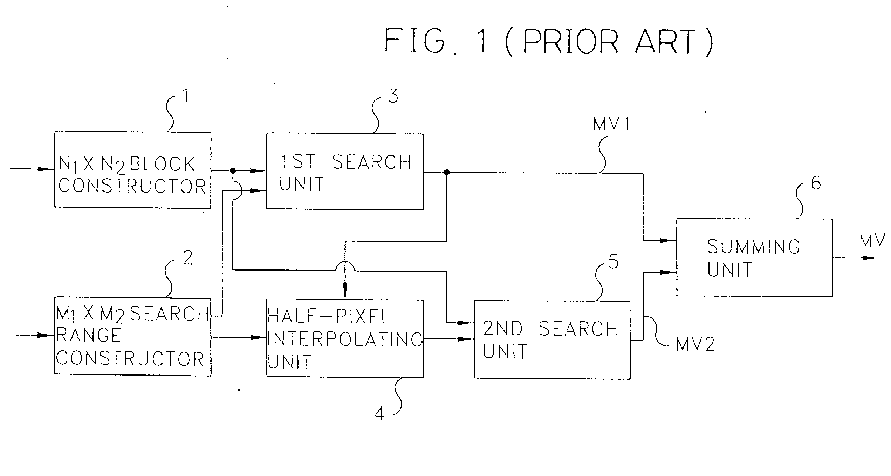

The apparatus of Fig. 1 comprises N₁ X N₂ block constructor 1 for receiving an image signal of the present frame and constructing an image block composed of N₁ X N₂ pixels; M₁ X M₂ search range constructor 2 for receiving the image signal of the previous frame and constructing the image block composed of M₁ X M₂ pixels; a first search unit 3 for receiving the image signals output from the N₁ X N₂ block constructor 1 and the M₁ X M₂ search range constructor 2 and detecting a first motion vector MV1 of a pixel unit; a half-pixel interpolating unit 4 for receiving image signals output from the M₁ X M₂ search range constructor 2 and the first search unit 3 and calculating an image signal value in a half-pixel location around reference pixels, using the image block within the previous frame which is determined by the first motion vector MV1 detected from the first search unit 3 and the image blocks which are obtained by moving the image block at intervals of one pixel; a second search unit 5 for receiving the image signals output from the N₁ × N₂ block constructor 1 and the half-pixel interpolating unit 4 and outputting a second motion vector MV2 of a half-pixel unit; and a summing unit 6 for receiving and summing the output signals MV1, MV2 from the first search unit 3 and the second search unit 5, and outputting a motion vector MV.

The N₁ × N₂ block constructor 1 receives the image signal of the present frame and stores the input signal in a size of N₁ × N₂ blocks. Simultaneously with inputting the image signal of the present frame, the M₁ × M₂ search range constructor 2 receives the image signal of the previous frame and constructs a search range of M₁ × M₂ magnitude. The first search unit 3 moves the N₁ × N₂ block of the present frame in a pixel unit within the search range of the previous frame. In comparing data of a pixel unit between two blocks, the first motion vector MV1 of an integer-pixel unit is calculated by a block location within the search range where a mean squared error MSE or a mean absolute error MAE is a minimum. The first motion vector MV1 of an integer-pixel unit generated from the first search unit 3 is output to the summing unit 6 and the half-pixel interpolating unit 4. The half-pixel interpolating unit 4 linearly interpolates the reference pixels of a designated block within the previous frame by the first motion vector MV1 of an integer-pixel unit and the surrounding pixels, calculates half-pixel values, and then outputs the calculated values to the second search unit 5.

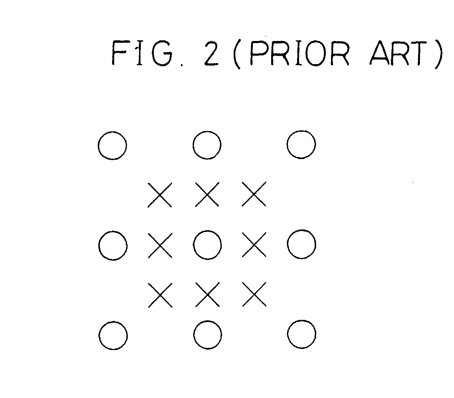

In FIG. 2, "○" shows intervals of a pixel unit, and "×" indicates intervals of a half-pixel unit. The second search unit 5 moves the image block of the previous frame corresponding to the first motion vector MV1 of an integer-pixel unit to every direction per half-pixel respectively, searches a location of a minimum motion compensation error among locations × of obtained eight half-pixel motion vectors and the first motion vector MV1, and outputs one of vector components (-¹/₂, 0, ¹/₂), that is, a minutely controlled value of a half-pixel unit. The summing unit 6 sums the first motion vector MV1 of an integer-pixel unit output from the first search unit 3 and the second motion vector MV2 of a half-pixel unit from the second search unit 5, thereby outputting a complete motion vector MV for the motion estimation. For example, the summing unit 6 sums the horizontal component (-¹/₂) of the second motion vector MV2 of a half-pixel unit from the second search unit 5 to the motion vector (MV=(x, y)) of a pixel unit from the first search unit 3, and then determines the motion vector MV=(x-¹/₂, y)).

The above conventional method determines the location of blocks using the motion vector of a pixel interval unit, linearly interpolates corresponding pixel values between the determined block and surrounding pixels of the block. The method uses the interpolated half-pixel values and the block pixel values of the present frame determined by the motion vector of an integer-pixel unit, and selects the most similar block among eight half-pixel motion positions, that is, "×" of FIG. 2. Accordingly, the conventional method has a drawback in that it takes too long to process the data for providing a half-pixel resolution estimation of the motion vector.

Other prior art motion estimation systems use parabolic curve fitting. Examples of such systems can be found in digital spectrum compatible. Technical Details, 23 September 1991, Zenith and AT &T, U.S.A, pages 13-16 and EP-A-0468279.

It is an aim of the present invention to solve the aforementioned problem.

A method according to the present invention is characterised in that generation of the half-pixel resolution vector comprises, for each of said orthogonal axes, the steps of: comparing the error values of a first of said displaced blocks with the second of said displaced blocks modified by a factor; comparing the error values of the second of said displaced blocks with the first of said displaced blocks modified by a factor; and outputting a half-pixel motion vector signal on the basis of said comparisons.

Preferably, the comparison of the first and second displaced block error values comprises the steps of: determining the difference between each of the displaced block error values and the error value for the block at the position identified by the one-pixel resolution motion vector to produce first and second differential values (a, b); comparing the first differential value (a) with the second differential value (b) multiplied by a factor; and comparing the second differential value (b) with the first differential value (a) multiplied by a factor.

More preferably, the step of outputting a half-pixel motion vector signal on the basis of said comparisons comprises the steps of: outputting a first signal if the first differential value is greater than the second differential value multiplied by a factor; outputting a second signal if the second differential value is greater than the first differential value multiplied by a factor; and outputting a third signal if neither the first differential value is greater than the second differential value multiplied by a factor nor the second differential value is greater than the first differential value multiplied by a factor, the first, second and third signals indicating +1/2 pixel, -1/2 pixel and 0 pixel half-pixel resolution motion vector values.

Preferably, the one pixel resolution motions vector on the basis of said error values; means for generating a half-pixel resolution motion vector on the basis of the error value of the block at the position identified by the one-pixel resolution motion vector and the error values for the blocks at the positions displaced therefrom by one-pixel along two orthogonal axes; and means for summing the one-pixel and half-pixel resolution motion vectors.

An image signal motion estimator according to the present invention is characterised in that the means for generation of the half-pixel resolution vector comprises, for each of said orthogonal axes: a first comparing means for comparing the error values of a first of said displaced blocks with the second of said displaced blocks modified by a factor; a second comparing means for comparing the error values of the second of said displaced blocks with the first of said displaced blocks modified by a factor, and means for outputting a half-pixel motion vector signal on the basis of said comparisons.

Preferably, the means for generation of the half-pixel resolution vector comprises, for each of said orthogonal axes: a first and second subtracters for subtracting the error value of the block at the position identified by the one-pixel resolution motion vector from the error value of the first of said displaced block and from the error value of the second of said displaced blocks respectively; first and second multiplying means for multiplying respective subtracter outputs by factors; a first comparator for comparing the output of the first subtracter and the output of the first multiplying means; a second comparator for comparing the output of the second subtracter and the output of the second multiplying means; and a NOR gate having the outputs of the comparators as it inputs.

Preferably, the search means is configured configured to determine the one-pixel resolution motion vector from position of the block in the preceding producing the smallest error value.

An embodiment of the present invention will now be described, by way of example, with reference to Figures 3 to 5b of the accompanying drawings, in which:-

Figure 1 is a block diagram for illustrating a conventional apparatus for motion estimation.

Figure 2 is a conceptual diagram for showing a pixel unit and a half-pixel unit.

Figure 3 is a block diagram illustrating an apparatus for the motion estimation in accordance with a preferred embodiment of the present invention.

Figure 4 is a detailed block diagram illustrating a horizontal half-pixel controller of Figure 3.

Figures 5(a) and 5(b) are conceptual diagrams showing a method for determining motion vectors of a half-pixel unit in the horizontal half-pixel controller.

A motion vector of a predetermined block in the present frame corresponding to a search range of a previous frame is represented by MV = (x, y). Here, the motion vector MV has a horizontal component of motion vector x and a vertical component of motion vector y. Hereinafter, the present invention will be described using a half-pixel unit, a kind of a sub-pixel unit.

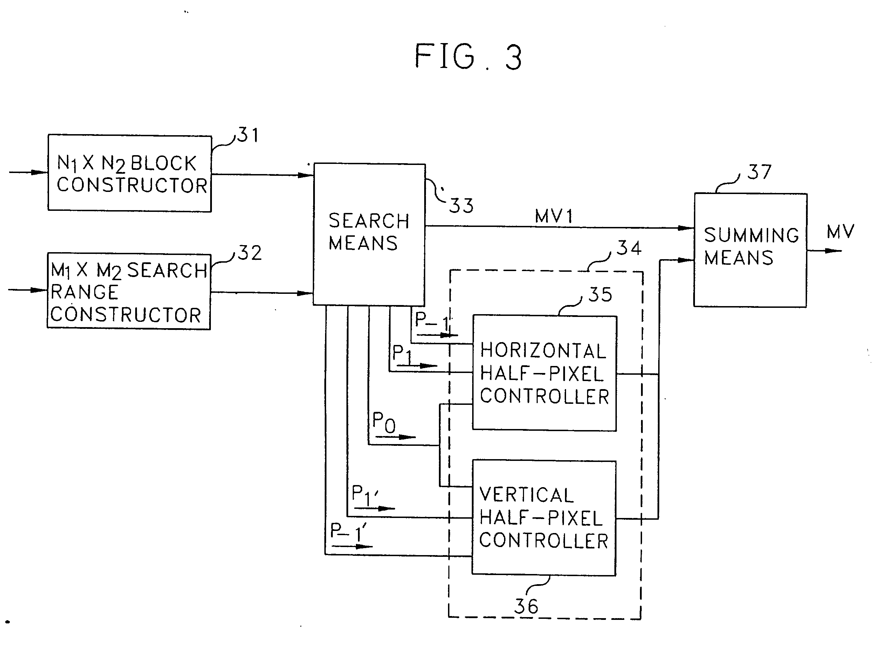

FIG. 3 is a block diagram illustrating an apparatus for motion estimation in accordance with a preferred embodiment of the present invention.

The apparatus of FIG. 3 comprises N₁ × N₂ block constructor 31 for receiving an image signal of the present frame and constructing image blocks composed of N₁ × N₂ pixels; M₁ × M₂ search range constructor 32 for receiving the image signal of the previous frame and constructing image blocks composed of M₁ × M₂ pixels; search means for receiving the image signals output from the N₁ × N₂ block constructor 31 and the M₁ × M₂ search range constructor 32, detecting a first motion vector MV1 of a pixel unit, comparing data between five image blocks generated by moving a block of N₁ × N₂ size to every direction per one pixel respectively in the center of a reference pixel within the previous frame corresponding to the detected first motion vector MV1 and the image block within the present frame, and generating error values according to the result of comparison; half-pixel control means 34 for receiving the errors output from the search means 33 and calculating a second motion vector MV2 in a half-pixel interval vertically and horizontally based on the reference pixel; and summing means 37 for receiving the first motion vector MV1 from the search means 33 and the second motion vector MV2 from the half-pixel control means 34, summing and outputting them. The half-pixel control means 34 includes a horizontal half-pixel controller 35 for detecting a horizontal component of the second motion vector MV2 and vertical half-pixel controller 35 for detecting a vertical component of the second motion vector MV2.

In the image signal of two adjacent frames with the lapse of time, the N₁ × N₂ block constructor 31 receives the image signal of the present frame and stores the input signal in a size of N₁ × N₂ block. Simultaneously with inputting the image signal of the present frame, the M₁ × M₂ search range constructor 32 receives the image signal of the previous frame and stores it in a size of M₁ × M₂ block larger than N₁ × N₂ block. The search means 33 receives respectively the image signals of the stored M₁ × M₂ block and N₁ × N₂ block output from the M₁ × M₂ search range constructor 32 and the N₁ × N₂ block constructor 31.

A motion estimation error obtained by estimating the motion vector of an integer-pixel unit is set as P₀. Motion estimation errors which are generated by moving to every direction per one pixel respectively on the basis of the estimated motion vector, are respectively P₁', P₋₁', P₋₁, and P₁. Mean absolute error MAE or mean squared error MSE is used for calculating motion estimation errors. The equations to calculate the horizontal motion estimation errors (P₀, P₁, P₋₁) by the MAE are as follows.

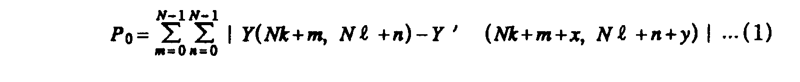

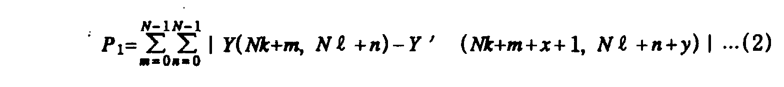

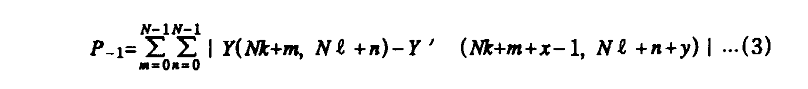

Here, Y represents the image signal of the present frame, Y' shows that of the previous frame, and N₁=N₂=N is a block size. The above equations are corresponds to (k, ℓ) times block from the top of the left in frames. The vertical motion estimation errors (P₁', P₋₁') can be calculated by the same method as the above equation.

The search means 33 compares, in a pixel unit, data magnitude between the image block of the present frame and a plurality of image blocks which are present within the search range of the previous frame and have similar sizes, and calculates motion estimation errors by the result of comparison. The first motion vector MV1 of an integer-pixel unit is determined by a block location where the motion estimation error is a minimum, and is output to the summing means 37. The search means 33 calculates the motion estimation errors (P₋₁, P₁, P₀, P₋₁', P₁') by the reference image block within the previous frame determined by the motion vector of an integer-pixel unit and a number of image blocks surrounding the reference image block per one pixel. Then, the calculated motion estimation errors (P₋₁, P₁, P₀, P₋₁', P₁') are output to the half-pixel control means 34. The present invention simultaneously and individually determines the horizontal and vertical components of motion vector of a half-pixel unit. However, since the horizontal half-pixel controller 35 and the vertical half-pixel controller 36 use the same method, described will be only a method for determining the horizontal component of motion vector of a half-pixel unit.

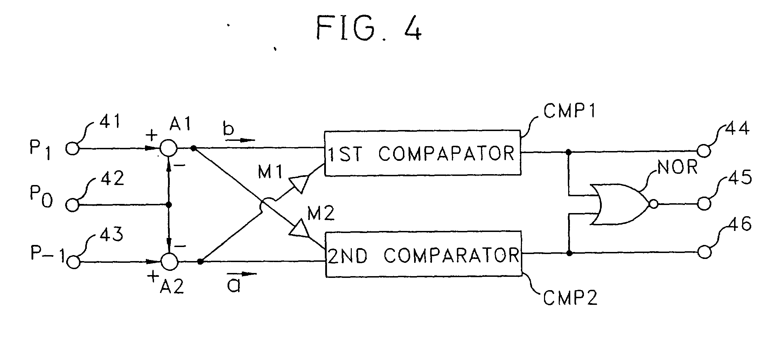

FIG. 4 is a detailed block diagram illustrating the horizontal half-pixel controller of FIG. 3.

The device of FIG. 4 comprises three input terminals 41, 42, 43 for receiving the motion estimation errors (P₁, P₀, P₋₁); a first adder A1 for adding and outputting the input signal P₁ of a first input terminal 41 and the input signal P₀ of a second input terminal 42; a second adder A2 for adding and outputting the input signal P₀ of the second input terminal 42 and the input signal P₋₁ of a third input terminal 43; a first comparator CMP1, coupled a predetermined input terminal to an output terminal of the first adder A1, for comparing and outputting the input signals; a second comparator CMP2, coupled a predetermined input terminal to an output terminal of the second adder A2, for comparing and outputting the input signals; a second multiplier M2 for multipling the output signal of the first adder A1 by a predetermined coefficient and outputting a multiplied value to the second comparator CMP2; a first multiplier M1 for multipling the output signal of the second adder A2 by a predetermined coefficient and outputting a multiplied value to the first comparator CMP1; and a NOR gate NOR for performing a logic NOT OR function for the output signals from the comparators CMP1, CMP2. The device further comprises three output terminals 44, 45, 46 to distinguish each of the output signals from first comparator CMP1, NOR gate NOR and second comparator CMP2.

The motion estimation errors (P₁, P₀, P₋₁) output from the search means 33 are input to the horizontal half-pixel controller 35 of the half-pixel control means 34. Then, the first adder A1 subtracts the input signal P₀ through the second input terminal 42 from the input signal P₁ through the first input terminal 41. The second adder A2 subtracts the input signal P₀ through the second input terminal 42 from the input signal P₋₁ through the third input terminal 43. The first and second multipliers M1, M2 multiply a predetermined coefficient to each of input signals and output the multiplied result to the comparators CMP1,CMP2, connected to the output of the multipliers, respectively. A differece value (a) between P₀ and P₋₁ and that (b) between P₀ and P₁ are respectively input to the second comparator CMP2 and the first comparator CMP1. So, the first comparator CMP1 compares and outputs the output signals from the first adder A1 and the first multiplier M1. The second comparator CMP2 compares and outputs the output signals from the second adder A2 and the second multiplier M2.

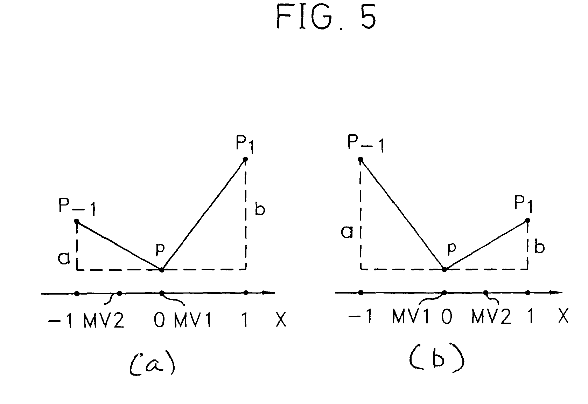

FIGs. 5(a) and 5(b) are conceptual diagrams showing a method for determining motion vectors of a half-pixel unit in the horizontal half-pixel controller 35. FIG. 5(a) shows that the motion vector of a half-pixel unit is present at the left from the motion vector MV of a pixel unit, and FIG. 5(b) does that the motion vector MV of a half-pixel unit is present at the right from the motion vector of a pixel unit.

In FIG. 5(a), what P₁ is larger than P₋₁ (that is, b is larger than a) is that the motion vector MV locates about ¹/₂ from the first motion vector MV1 of a pixel unit to the left. In FIG. 5(b), what P₋₁ is larger than P₁ on the basis of P₀ (that is, a is larger than b) is that the motion vector MV locates about ¹/₂ from the first motion vector MV1 of a pixel unit to the right.

In FIG. 5(a), in the case of P₁ is larger than P₋₁ on the basis of P₀, only the output 44 of the first comparator CMP1 is "high". Thus, the horizontal half-pixel controller 35 outputs "-¹/₂", the horizontal component value of the second motion vector MV2. In FIG. 5(b), in the case of P₋₁ is larger than P₁ on the basis of P₀, only the output 46 of the second comparator CMP2 is "high". Thus, the horizontal half-pixel controller 35 outputs "¹/₂", the horizontal component value of the second motion vector MV2. Where P₁ and P₋₁ on the basis of P₀ are equal each other, the output signals of the two comparators CMP1, CMP2 are all "low". Therefore, the NOR gate NOR receives low values and its output signal becomes "high". Accordingly, the horizontal component of the second motion vector MV2 becomes "0".

The summing means 37 receives the second motion vector MV2 and adds it to the first motion vector MV1 of a pixel unit obtained by the search means 33, thereby estimating the second motion vector MV2 of a half-pixel unit.

A method and apparatus for motion estimation in accordance with the present invention compares image signals of image blocks within a previous frame corresponding to a motion vector detected among error values used for detecting the motion vector of a pixel unit and surrounding image blocks which are generated by moving the reference image block to every direction per one pixel respectively with the image signal of image blocks within a present frame which the motion estimation is performed, and then generates error values according to the comparison results. By vertically comparing the generated error values, a vertical component in the motion vector of a half-pixel unit is detected. By horizontally comparing the generated error values, a horizontal component to the motion vector of a half-pixel unit is detected. Accordingly, the present invention leads to a greater efficiency to reduce the amount of data to be processed for the detection of the motion vector of a half-pixel unit.

## Claims

1. A motion estimating method for an image signal, comprising the steps of:
comparing a block of pixels of a frame of an image signal with same-sized blocks of pixels within a region of the preceding frame to produce an error value for each possible comparison;
generating a one-pixel resolution motion vector (MV1) on the basis of said error values;
generating a half-pixel resolution motion vector (MV2) on the basis of the error value of the block at the position identified by the one-pixel resolution motion vector and the error values for the blocks at the positions displaced therefrom by one-pixel along two orthogonal axes; and
summing the one-pixel and half-pixel resolution motion vectors to produce an output motion vector (MV),
**characterised in that**
generation of the half-pixel resolution vector comprises, for each of said orthogonal axes, the steps of:
comparing the error values (P₁, P₋₁, P'₁, P'₋₁) of a first of said displaced blocks with the second of said displaced blocks modified by a factor;
comparing the error values (P₁, P₋₁, P'₁, P'₋₁) of the second of said displaced blocks with the first of said displaced blocks modified by a factor; and
outputting a half-pixel motion vector signal on the basis of said comparisons.

2. A method according to claim 1, wherein the comparisons of said first and second displaced block error values comprise the steps of:
determining the difference between each of the displaced block error values (P₁, P₋₁, P'₁, P'₋₁) and the error value (P₀) for the block at the position identified by the one-pixel resolution motion vector to produce first and second differential values (a, b);
comparing the first differential value (a) with the second differential value (b) multiplied by a factor; and
comparing the second differential value (b) with the first differential value (a) multiplied by a factor.

3. A method according to claim 2, wherein the step of outputting a half-pixel motion vector signal on the basis of said comparisons comprises the steps of:
outputting a first signal if the first differential value is greater than the second differential value multiplied by a factor;
outputting a second signal if the second differential value is greater than the first differential value multiplied by a factor; and
outputting a third signal if neither the first differential value is greater than the second differential value multiplied by a factor nor the second differential value is greater than the first differential value multiplied by a factor,
the first, second and third signals indicating +1/2 pixel, -1/2 pixel and 0 pixel half-pixel resolution motion vector values.

4. A method according to claim 1, 2 or 3, wherein the one-pixel resolution motion vector is determined from position of the block in the preceding producing the smallest error value.

5. An image signal motion estimator comprising:
search means (33) for comparing a block of pixels of a frame of an image signal with same-sized blocks of pixels within a region of the preceding frame to produce an error value for each possible comparison, and generating a one-pixel resolution motion vector on the basis of said error values;
means (34) for generating a half-pixel resolution motion vector on the basis of the error value of the block at the position identified by the one-pixel resolution motion vector and the error values for the blocks at the positions displaced therefrom by one-pixel along two orthogonal axes; and
means (37) for summing the one-pixel and half-pixel resolution motion vectors,
**characterised in that**
the means for generation of the half-pixel resolution vector comprises, for each of said orthogonal axes:
a first comparing means (A1, A2, M2, CMP2) for comparing the error values of a first of said displaced blocks with the second of said displaced blocks modified by a factor;
a second comparing means (A1, A2, M1, CMP1) for comparing the error values of the second of said displaced blocks with the first of said displaced blocks modified by a factor, and
means (NOR, 44, 45, 46) for outputting a half-pixel motion vector signal on the basis of said comparisons.

6. A motion estimator according to claim 5, wherein the means for generation of the half-pixel resolution vector comprises, for each of said orthogonal axes:
a first and second subtracters (A2, A1) for subtracting the error value (Pₒ) of the block at the position identified by the one-pixel resolution motion vector from the error value (P₋₁, P'₋₁) of the first of said displaced block and from the error value (P₁, P'₁) of the second of said displaced blocks respectively;
first and second multiplying means (M2, M1) for multiplying respective subtracter (A2, A1) outputs by factors;
a first comparator (CMP2) for comparing the output of the first subtracter (A2) and the output of the first multiplying means (M2);
a second comparator (CMP1) for comparing the output of the second subtracter (A1) and the output of the second multiplying means (M1); and
a NOR gate having the outputs of the comparators (CMP1, CMP2) as it inputs.

7. A motion estimator according to claim 5 or 6, wherein the search means is configured to determine the one-pixel resolution motion vector from position of the block in the preceding producing the smallest error value.

## Patentansprüche

1. Bewegungsschätzverfahren für ein Bildsignal, mit den folgenden Schritten:
Vergleichen eines Pixelblocks eines Vollbildes eines Bildsignals mit gleich großen Pixelblöcken innerhalb eines Bereichs des vorangehenden Vollbildes, um einen Fehlerwert für jeden möglichen Vergleich zu erzeugen;
Erzeugen eines Einpixelauflösung-Bewegungsvektors (MV1) anhand der Fehlerwerte;
Erzeugen eines Halbpixelauflösung-Bewegungsvektors (MV2) anhand des Fehlerwerts des Blocks an der durch den Einpixelauflösung-Bewegungsvektor identifizierten Position und der Fehlerwerte für die Blöcke an den Positionen, die hiervon um ein Pixel längs zweier zueinander senkrechter Achsen versetzt sind; und
Summieren der Einpixel- und Halbpixelauflösung-Bewegungsvektoren, um einen Ausgangsbewegungsvektor (MV) zu erzeugen,
**dadurch gekennzeichnet**, daß
die Erzeugung des Halbpixelauflösung-Vektors für jede der zueinander senkrechten Achsen die folgenden Schritte enthält:
Vergleichen der Fehlerwerte (P₁, P₋₁, P'₁, P'₋₁) eines ersten der versetzten Blöcke mit dem durch einen Faktor modifizierten zweiten der versetzten Blöcke;
Vergleichen der Fehlerwerte (P₁, P₋₁, P'₁, P'₋₁) des zweiten der versetzten Blöcke mit dem durch einen Faktor modifizierten ersten der versetzten Blöcke; und
Ausgeben eines Halbpixel-Bewegungsvektorsignals anhand der Vergleiche.

2. Verfahren nach Anspruch 1, bei dem die Vergleiche der Fehlerwerte der ersten und zweiten versetzten Blöcke die folgenden Schritte enthalten:
Bestimmen der Differenz zwischen jedem der Fehlerwerte (P₁, P₋₁, P'₁, P'₋₁) versetzter Blöcke und des Fehlerwerts (P₀) für den Block an der durch den Einpixelauflösung-Bewegungsvektor identifizierten Position, um erste und zweite differentielle Werte (a, b) zu erzeugen;
Vergleichen des ersten differentiellen Wertes (a) mit dem mit einem Faktor multiplizierten zweiten differentiellen Wert (b); und
Vergleichen des zweiten differentiellen Wertes (b) mit dem mit einem Faktor multiplizierten ersten differentiellen Wert (a).

3. Verfahren nach Anspruch 2, bei dem der Schritt des Ausgebens eines Halbpixel-Bewegungsvektorsignals anhand der Vergleiche die folgenden Schritte enthält:
Ausgeben eines ersten Signals, falls der erste differentielle Wert größer als der mit einem Faktor multiplizierte zweite differentielle Wert ist;
Ausgeben eines zweiten Signals, falls der zweite differentielle Wert größer als der mit einem Faktor multiplizierte erste differentielle Wert ist; und
Ausgeben eines dritten Signals, falls weder der erste differentielle Wert größer als der mit einem Faktor multiplizierte zweite differentielle Wert ist noch der zweite differentielle Wert größer als der mit einem Faktor multiplizierte erste differentielle Wert ist,
wobei die ersten, zweiten und dritten Signale die Halbpixelauflösung-Bewegungsvektorwerte +1/2 Pixel, -1/2-Pixel und 0 Pixel angeben.

4. Verfahren nach Anspruch 1, 2 oder 3, bei dem der Einpixelauflösung-Bewegungsvektor anhand der Position des Blocks bei der vorangehenden Erzeugung des kleinsten Fehlerwerts bestimmt wird.

5. Bildsignal-Bewegungsschätzeinrichtung, mit:
einer Sucheinrichtung (33) zum Vergleichen eines Pixelblocks eines Vollbildes eines Bildsignals mit gleich großen Pixelblöcken innerhalb eines Bereichs des vorangehenden Vollbildes, um einen Fehlerwert für jeden möglichen Vergleich zu erzeugen, und zum Erzeugen eines Einpixelauflösung-Bewegungsvektors anhand der Fehlerwerte;
einer Einrichtung (34) zum Erzeugen eines Halbpixelauflösung-Bewegungsvektors anhand des Fehlerwerts des Blocks an der durch den Einpixelauflösung-Bewegungsvektor identifizierten Position und der Fehlerwerte für die Blöcke an den Positionen, die hierzu längs zweier zueinander senkrechter Achsen um ein Pixel versetzt sind; und
einer Einrichtung (37) zum Summieren der Einpixel- und Halbpixelauflösung-Bewegungsvektoren,
**dadurch gekennzeichnet**, daß
die Einrichtung zum Erzeugen des Halbpixelauflösung-Vektors für jede der zueinander senkrechten Achsen enthält:
eine erste Vergleichseinrichtung (A1, A2, M2, CMP2) zum Vergleichen der Fehlerwerte der ersten der versetzten Blöcke mit dem durch einen Faktor modifizierten zweiten der versetzten Blöcke;
eine zweite Vergleichseinrichtung (A1, A2, M1, CMP1) zum Vergleichen der Fehlerwerte des zweiten der versetzten Blöcke mit dem durch einen Faktor modifizierten ersten der versetzten Blöcke; und
eine Einrichtung (NOR, 44, 45, 46) zum Ausgeben eines Halbpixel-Bewegungsvektorsignals anhand der Vergleiche.

6. Bewegungsschätzeinrichtung nach Anspruch 5, bei der die Einrichtung zum Erzeugen des Halbpixel-Auflösungsvektors für jede der zueinander senkrechten Achsen enthält:
einen ersten und einen zweiten Subtrahierer (A2, A1) zum Subtrahieren des Fehlerwerts (P₀) des Blocks an der durch den Einpixelauflösung-Bewegungsvektor identifizierten Position von dem Fehlerwert (P₋₁, P'₋₁) des ersten der versetzten Blöcke bzw. vom Fehlerwert (P₁, P'₁) des zweiten der versetzten Blöcke;
eine erste und eine zweite Multiplikationseinrichtung (M2, M1) zum Multiplizieren jeweiliger Ausgänge der Subtrahierer (A2, A1) mit Faktoren;
einen ersten Komparator (CMP2) zum Vergleichen des Ausgangs des ersten Subtrahierers (A2) und des Ausgangs der ersten Multiplikationseinrichtung (M2);
einen zweiten Komparator (CMP1) zum Vergleichen des Ausgangs des zweiten Subtrahierers (A1) und des Ausgangs der zweiten Multiplikationseinrichtung (M1); und
ein NOR-Gatter, das als Eingänge die Ausgänge der Komparatoren (CMP1, CMP2) besitzt.

7. Bewegungsschätzeinrichtung nach Anspruch 5 oder 6, bei der die Sucheinrichtung so konfiguriert ist, daß sie den Einpixelauflösung-Bewegungsvektor anhand der Position des Blocks bei der vorangehenden Erzeugung des kleinsten Fehlerwertes bestimmt.

## Revendications

1. Procédé d'évaluation de mouvement pour un signal d'image, comprenant les étapes suivantes :
- comparer un bloc de pixels d'une trame d'un signal d'image avec des blocs de pixels de même taille dans une zone de la trame précédente afin de produire une valeur d'erreur pour chaque comparaison possible;
- générer un vecteur de mouvement de résolution d'un pixel (MV1) sur la base desdites valeurs d'erreur;
- générer un vecteur de mouvement de résolution d'un demi pixel (MV2) sur la base de la valeur d'erreur du bloc sur la position identifiée par le vecteur de mouvement de résolution d'un pixel et des valeurs d'erreur pour les blocs sur les positions déplacées d'un pixel selon deux axes orthogonaux; et
- ajouter les vecteurs de mouvement de résolution d'un pixel et d'un demi-pixel pour produire un vecteur de mouvement de sortie (MV);
caractérisé en ce que la génération du vecteur de résolution d'un demi-pixel comprend, pour chacun desdits axes orthogonaux, les étapes suivantes :
- comparer les valeurs d'erreur (P₁, P₋₁, P'₁, P'₋₁) d'un premier desdits blocs déplacés avec le second desdits blocs déplacés modifiées par un facteur;
- comparer les valeurs d'erreur (P₁, P₋₁, P'₁, P'₋₁) du second desdits blocs déplacés avec le premier desdits blocs déplacés modifiées par un facteur; et
- générer un signal de vecteur de mouvement d'un demi pixel sur la base desdites comparaisons.

2. Procédé selon la revendication 1, dans lequel les comparaisons desdites première et seconde valeurs d'erreur de blocs déplacés comprennent les étapes suivantes :
- déterminer la différence entre chacune des valeurs d'erreur de bloc déplacé (P₁, P₋₁, P'₁, P'₋₁) et la valeur d'erreur (P₀) pour le bloc sur la position identifiée par le vecteur de mouvement de résolution d'un pixel afin de produire des première et seconde valeurs différentielles (a, b);
- comparer la première valeur différentielle (a) avec la seconde valeur différentielle (b) multipliée par un facteur; et
- comparer la seconde valeur différentielle (b) avec la première valeur différentielle (a) multipliée par un facteur.

3. Procédé selon la revendication 2, dans lequel l'étape de génération d'un signal de vecteur de mouvement d'un demi-pixel sur la base desdites comparaisons comprend les étapes suivantes :
- générer un premier signal si la première valeur différentielle est supérieure à la seconde valeur différentielle multipliée par un facteur;
- générer un second signal si la seconde valeur différentielle est supérieure à la première valeur différentielle multipliée par un facteur; et
- générer un troisième signal si la première valeur différentielle n'est pas supérieure à la seconde valeur différentielle multipliée par un facteur et la seconde valeur différentielle n'est pas supérieure à la première valeur différentielle multipliée par un facteur;
les premier, second et troisième signaux indiquant des valeurs de vecteur de mouvement de résolution d'un demi-pixel de +1/2 pixel, -1/2 pixel et 0 pixel.

4. Procédé selon la revendication 1, 2 ou 3, dans lequel le vecteur de mouvement de résolution d'un pixel est déterminé à partir de la position du bloc dans la précédente produisant la plus petite valeur d'erreur.

5. Estimateur de mouvement de signal d'image comprenant :
- un moyen de recherche (33) pour comparer un bloc de pixels d'une trame d'un signal d'image avec des blocs de pixels de même taille dans une zone de la trame précédente afin de produire une valeur d'erreur pour chaque comparaison possible, et pour générer un vecteur de mouvement de résolution d'un pixel sur la base desdites valeurs d'erreur;
- un moyen (34) pour générer un vecteur de mouvement de résolution d'un demi-pixel sur la base de la valeur d'erreur du bloc sur la position identifiée par le vecteur de mouvement de résolution d'un pixel et des valeurs d'erreur pour les blocs sur les positions déplacées d'un pixel selon deux axes orthogonaux; et
- un moyen (37) pour ajouter les vecteurs de mouvement de résolution d'un pixel et d'un demi pixel;
caractérisé en ce que :
- le moyen de génération du vecteur de résolution d'un demi-pixel comprend, pour chacun desdits axes orthogonaux :
- un premier moyen de comparaison (A1, A2, M2, CMP2) pour comparer les valeurs d'erreur d'un premier desdits blocs déplacés avec le second desdits blocs déplacés modifiées par un facteur;
- un second moyen de comparaison (A1, A2, M1, CMP1) pour comparer les valeurs d'erreur du second desdits blocs déplacés avec le premier desdits blocs déplacés modifiées par un facteur; et
- un moyen (NON-OU, 44, 45, 46) pour générer un signal de vecteur de mouvement d'un demi-pixel sur la base desdites comparaisons.

6. Estimateur de mouvement selon la revendication 5, dans lequel le moyen de génération du vecteur de résolution d'un demi-pixel comprend, pour chacun desdits axes orthogonaux :
- des premier et second soustracteurs (A2, A1) pour soustraire respectivement la valeur d'erreur (P₀) du bloc sur la position identifiée par le vecteur de mouvement de résolution d'un pixel à partir de la valeur d'erreur (P₋₁, P'₋₁) du premier desdits blocs déplacés et de la valeur d'erreur (P₁, P'₁) du second desdits blocs déplacés;
- des premier et second moyens de multiplication (M2, M1) pour multiplier des sorties respectives de soustracteurs (A2, A1) par des facteurs;
- un premier comparateur (CMP2) pour comparer la sortie du premier soustracteur (A2) avec la sortie du premier moyen de multiplication (M2);
- un second comparateur (CMP1) pour comparer la sortie du second soustracteur (A1) avec la sortie du second moyen de multiplication (M1); et
- une porte logique NON-OU possédant les sorties des comparateurs (CMP1, CMP2) comme entrées.

7. Estimateur de mouvement selon la revendication 5 ou 6, dans lequel le moyen de recherche est configuré pour déterminer le vecteur de mouvement de résolution d'un pixel à partir de la position du bloc dans la précédente produisant la plus petite valeur d'erreur.
